# EUROPÄISCHE PATENTSCHRIFT

(11) **EP 1 466 690 B1**
(45) Veröffentlichungstag und Bekanntmachung des Hinweises auf die Patenterteilung: **04.04.2007**
(21) Anmeldenummer: 04101409.3
(22) Anmeldetag: 06.04.2004
(51) Int. Cl.: B23D 49/16

(54) **Säbelsäge mit Justiervorrichtung für eine Führungsvorrichtung**
Saber saw with adjusting device for a guide
Scie sauteuse en forme de sabre avec dispositif d'ajustage pour un guide

(30) Priorität: 11.04.2003 DE 10316631
(43) Veröffentlichungstag der Anmeldung: 13.10.2004
(73) Patentinhaber: HILTI Aktiengesellschaft, 9494 Schaan (LI)
(72) Erfinder: Hartmann, Markus, 87665 Mauerstetten (DE)
(74) Vertreter: Wildi, Roland

(56) Entgegenhaltungen:
- US-B1- 6 317 988

## Beschreibung

Die Erfindung betrifft eine motorisch angetriebene Säbelsäge mit einem Gehäuse, an dem im Bereich eines Gerätehalses, der als Haltegriff dient und der eine Werkzeugöffnung aufweist, eine Führungsvorrichtung zur Führung der Säbelsäge an einem Werkstück lösbar angebracht ist, wobei die Führungsvorrichtung eine Verbindungseinrichtung aufweist und am Gehäuse eine Verbindungsaufnahmeeinrichtung vorgesehen ist, die eine Führung für die Verbindungseinrichtung bildet und an der eine Justiervorrichtung angeordnet ist, mit der die Verbindungseinrichtung gegenüber dem Gehäuse festlegbar ist und die durch eine Federkraft in eine Verriegelungsstellung vorgespannt ist. Die Justiervorrichtung weist dabei ein gerades Federelement auf, das im Wesentlichen in Längsrichtung des Gerätehalses, d.h. zumindest in der Verriegelungsstellung parallel zu dessen Längserstreckung, angeordnet ist.

Bei bekannten Säbelsägen kann normalerweise eine Führungseinrichtung, wie ein Führungsschuh oder ein Rohradapter, angebracht werden, um eine sichere und genaue Führung der Säbelsäge auf einem Werkstück zu erzielen. Das Führungsmittel ermöglicht es dabei, an einem Werkstück mit zumindest bereichsweise ebenem oder rundem Querschnitt einen präzisen Schnitt zu erzielen. Durch die Anordnung des Federelementes lässt sich ferner ein sehr flacher Bauraum der Justiervorrichtung erzielen, der im Bereich des Gerätehalses flach am Gehäuse anliegt. Hierdurch lässt sich der Gerätehals der Säbelsäge sehr schlank ausformen, was für eine gute Griffergonomie genutzt werden kann.

US 6,317,988 zeigt eine Säbelsäge, die an ihrem Gerätehals eine Aufnahme für einen Führungsschuhadapter aufweist, an dem die Träger eines Führungsschuhs festlegbar sind. Der Führungsschuhadapter ist in der Aufnahme gegen ein Dämpfungsmittel axial verschiebbar gehalten. Zudem weist die Aufnahme einen um eine quer zur Längsrichtung des Gerätehalses gerichtete Achse verschwenkbaren Hebel auf, der die Aufnahme je nach Schwenkposition schliesst oder frei gibt und an dem eine Blattfeder vorgesehen ist. Diese Blattfeder drückt die Träger des Führungsschuhs im geschlossenen Zustand der Aufnahme in Eingriff mit dem Führungsschuhadapter. Bei geöffnetem Hebel können die Träger durch Druck gegen die Blattfeder ausser Eingriff mit dem Führungsschuhadapter gebracht werden, um den Führungsschuh von der Säbelsäge zu trennen.

Aus der US 5,421,091 ist eine Säbelsäge mit einem Gehäuse, einem Führungsschuh zum Führen der Säbelsäge auf einem Werkstück und mit einer motorisch pendelartig angetriebenen Hubstange bekannt. Der Führungsschuh ist verschwenkbar an einem Ende einer Verbindungsschiene mit einer Längsausnehmung gelagert, wobei die Verbindungsschiene in einer im Wesentlichen quaderförmigen, flachen Schienenführung im Gehäuse der Säbelsäge geführt ist. Zur Festlegung der Verbindungsschiene an der Säbelsäge dient ein Verriegelungselement, das in einer senkrecht zu der Schienenführung im Gehäuse ausgeformten Ausnehmung geführt ist und durch eine ebenfalls in der Ausnehmung angeordneten Schraubenfeder gegen die Verbindungsschiene gedrückt wird. Hierdurch wird das Verriegelungselement in unbetätigtem Zustand in eine Verzahnung eingerastet, die an der Verbindungsschiene ausgeformt ist. Zum Verstellen oder Entfernen des Führungsschuhs wird das Verriegelungselement gegen die Schraubenfeder gedrückt und somit aus der Verzahnung heraus bewegt.

Aus der US 6,317,988 ist eine Säbelsäge mit einem Führungsschuh zum Führen der Säbelsäge auf einem Werkstück bekannt, bei der eine Verbindungsschiene des Führungsschuhs durch Lösen eines am Gehäuse gehaltenen Klemmhebels vom Gehäuse abnehmbar und in eine andere Position verbringbar ist. Anschliessend wird der Klemmhebel wieder am Gehäuse eingerastet, wobei er mit einer Blattfeder die Verbindungsschiene in der neuen Position gegen das Gehäuse drückt und sie dadurch an diesem festlegt.

Nachteilig an beiden bekannten Lösungen ist, dass sie einen relativ grossen Bauraum benötigen. Dies ist vor allem deshalb unakzeptabel, da die Justiereinrichtungen innerhalb des Gerätehalses angeordnet sind, der im Betrieb als Haltegriff dient. Ein grosser Querschnitt des Gerätehalses führt daher häufig zu einer schlechten Griffergonomie.

Zudem weisen die beiden bekannten Justiervorrichtungen einen relativ aufwändigen Aufbau auf oder können nur in einem relativ aufwändig ausgeformten Gehäuse montiert werden. In beiden Fällen entstehen somit relativ hohe Herstellungskosten.

Der vorliegenden Erfindung liegt die Aufgabe zugrunde, bei einer Säbelsäge mit Führungsmittel die vorgenannten Nachteile zu vermeiden und einen minimierten Bauraum der Justiervorrichtung bei geringen Herstellungskosten zu realisieren.

Erfindungsgemäss wird die Aufgabe durch eine Säbelsäge gemäß Anspruch 1 gelöst.

Auf diese Weise kann zumindest der Teil des Gehäuses, an dem die Justiervorrichtung gehalten ist, mit Hilfe einer relativ einfachen Form im Druckgussverfahren hergestellt werden. Kostenaufwändige Schieber oder eine zweite spanende Bearbeitungsrichtung entfallen hier, wodurch die Herstellungskosten niedrig gehalten werden. Zudem wird durch die einheitliche Entformungsrichtung am tragenden Gehäuseteil auch die Montage der Säge vereinfacht.

Vorzugsweise ist das gerade Federelement durch einen Stab mit federelastischen Eigenschaften gebildet, woraus geringe Materialkosten resultieren.

In einer besonders vorteilhaften Ausführungsform ist die Justiereinrichtung mit Hilfe eines einzigen Befestigungsmittels am Gehäuse montiert. Hierdurch ist eine besonders einfache Vormontage der Justiereinrichtung am Gehäuse möglich, was wiederum die Herstellungskosten senkt.

Vorzugsweise ist das Befestigungsmittel durch eine am Gehäuse einschraubbare Schraube gebildet, die zusammen mit einer Gehäuserippe eine Klemmeinrichtung ausformt, in der das Federelement gehalten ist. Hierdurch wird eine kostengünstige und einfache Montage der Justiervorrichtung gewährleistet.

Vorteilhafterweise weist die Justiervorrichtung an einer Gehäuseseite ein Verriegelungselement, das in der Verriegelungsstellung durch eine Gehäuseöffnung hindurch mit der Verbindungseinrichtung in Eingriff steht, sowie ein Wippelement aufweist, das an einem ersten Ende einen Betätigungsteil und an einem zweiten Ende einen Stellteil aufweist, der bei Drücken des Betätigungsteiles in Richtung der Gehäuseseite das Verriegelungselement in Richtung von der Gehäuseseite weg bewegt. Hierdurch wird die Montage der Justiervorrichtung erheblich vereinfacht, da alle deren Elemente an der betreffenden Gehäuseseite von Hand an der Aussenseite des Gehäuses angebracht werden können. Zudem erreicht man hierbei eine einfache Handhabung der Justiervorrichtung.

Ferner ist das Wippelement vorzugsweise in einer Lageraufnahme schwenkbar gehalten, die durch das Gehäuse und einen an ihm befestigten Handschutz begrenzt ist. Hierdurch wird das Wippelement allein durch die Anbringung des Handschutzes am Gehäuse dauerhaft verschwenkbar an diesem gehalten, ohne dass weitere Befestigungsmittel benötigt werden. Auf diese Weise ist eine sehr einfache Montage möglich.

Hierbei ist es vorteilhaft, wenn der Handschutz einen flexiblen Bereich aufweist, der im montierten Zustand am Betätigungsteil angeordnet ist. Ein solcher flexibler Bereich kann beispielsweise durch eine gegenüber dem übrigen Handschutz bereichsweise ausgebildete Materialreduzierung oder durch die bereichsweise Verwendung eines weicheren Materials ausgeformt sein. Auf diese Weise wird bei sicherer Abdichtung des Getriebes gegen Schmutzeintritt von Aussen eine einfache und sichere Betätigung der Justiervorrichtung gewährleistet.

Vorzugsweise weist der flexible Bereich eine geriffelte Oberfläche auf. Hierdurch kann die bedienende Person die Position des flexiblen Bereiches und damit des Betätigungsteiles des Wippelementes per Tastsinn erfühlen, wodurch die Handhabbarkeit der Justiervorrichtung verbessert wird.

Die Erfindung wird nachstehend anhand eines Ausführungsbeispieles näher erläutert. Es zeigen:
- Fig. 1: eine Explosionsdarstellung der Unterseite des Vorderteils einer erfindungsgemässen Säbelsäge mit Führungseinrichtung und Handschutz,
- Fig. 2: eine Ansicht der Unterseite des Vorderteils der Säbelsäge nach Fig. 1 bei abgenommenem Handschutz und
- Fig.3: einen Längsschnitt in der Ebene III-III durch das Vorderteil nach Fig. 2.

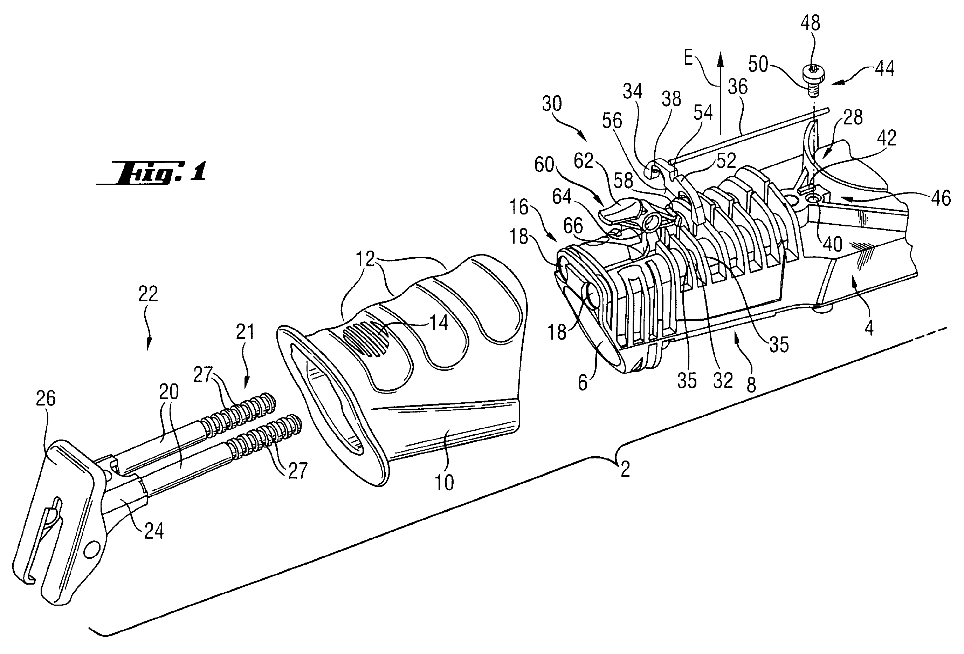

Die Fig. 1 bis 3 zeigen den werkzeugseitigen vorderen Teil einer motorisch angetriebenen Säbelsäge 2. Diese weist ein Gehäuse 4 auf, das zu einer Werkzeugöffnung 6 hin, durch die im Betrieb eine nicht dargestellte Hubstange mit daran befestigtem Sägeblatt hin- und herbewegt wird, einen Gerätehals 8 ausformt. Der Gerätehals 8 wird im Betrieb der Säbelsäge 2 als Haltegriff genutzt.

Aus diesem Grund wird, wie aus Fig. 1 zu entnehmen ist, bei der Montage der Säbelsäge ein Handschutz 10 auf den Gerätehals 8 aufgeschoben, der eine an die menschliche Hand weitestgehend angepasste Form aufweist. Dabei weist der Handschutz 10 an seiner Oberfläche drei Fingermulden 12 auf, die die Position einer haltenden Hand am Gerätehals 8 im Betrieb weitestgehend vorbestimmen. In der vordersten Fingermulde 12, die zur Anlage des Zeigefingers einer bedienenden Person vorgesehen ist, ist ein flexibler Bereich 14 mit einer geriffelten Oberfläche vorgesehen. Die geriffelte Oberfläche wird hierbei durch mehrere parallele nutenförmige Ausnehmungen erzeugt, die bewirken, dass der Handschutz 10 in dem flexiblen Bereich 14 elastischere Materialeigenschaften aufweist als an dem übrigen Handschutz 10.

Neben der Werkzeugöffnung 6 weist das Gehäuse 4 eine Verbindungsaufnahmeeinrichtung 16 in Form zweier im Gehäuse 4 ausgeformter Verbindungsausnehmungen 18 mit rundem Querschnitt auf. In diese kann eine durch zwei stangenförmige Verbindungsteile 20 gebildete Verbindungseinrichtung 21 einer Führungsvorrichtung 22 eingeschoben werden. Die Verbindungsteile 20 sind über einen Verbindungssteg 24 mit einem an diesem schwenkbar gehaltenen Führungsschuh 26 verbunden und weisen an dem vom Führungsschuh 26 abgewandten Ende jeweils mehrere Verriegelungseinschnürungen 27 auf.

Ferner ist an dem Gehäuse 4 an einer unteren Gehäuseseite 28 eine Justiervorrichtung 30 vorgesehen. Mit dieser kann die Verbindungseinrichtung 21 in der Verbindungsaufnahmeeinrichtung 16 festgelegt werden. Hierzu weist das Gehäuse 4 an der unteren Gehäuseseite 28 jeweils eine Gehäuseöffnung 32 an den Verbindungsausnehmungen 18 auf. An diesen Gehäuseöffnungen 32 ist ein Verriegelungselement 34 der Justiervorrichtung 30 gegenüber den Verbindungsausnehmungen 18 senkrecht verschiebbar zwischen zwei Führungsrippen 35 des Gehäuses 4 gehalten.

Das Verriegelungselement 34 ist durch ein gerades, stabförmiges Federelement 36 in Richtung der Verbindungsausnehmungen 18 vorgespannt. Hierdurch nimmt die Justiervorrichtung 30 im unbelasteten Zustand eine Verriegelungsstellung ein, bei der das Verriegelungselement 34 mit jeweils einem Verriegelungsabschnitt 38 durch die beiden Gehäuseöffnungen 32 in die beiden Verbindungsausnehmungen 18 hineinragt.

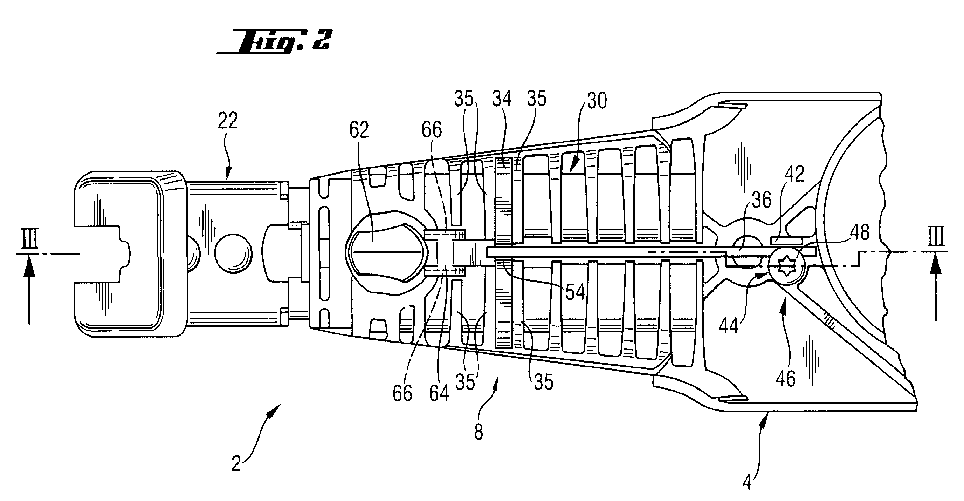

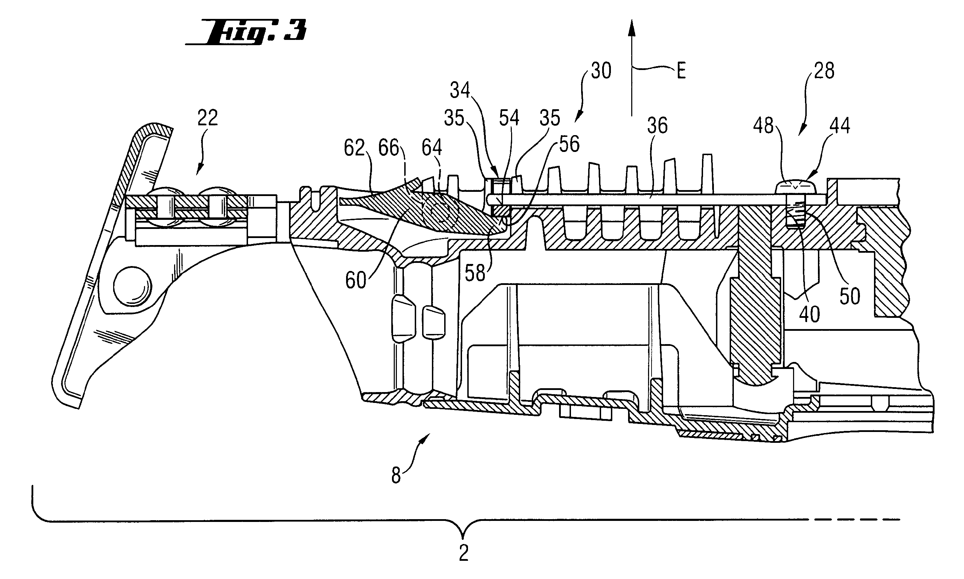

Zur Befestigung des geraden Federelementes 36 ist an der unteren Gehäuseseite 28 eine Schraubenaufnahme 40 neben einer Gehäuserippe 42 ausgeformt. Die Gehäuserippe 42 bildet zusammen mit einer Schraube 44, die in die Schraubenaufnahme 40 eingedreht wird eine Klemmeinrichtung 46. Bei der Montage wird das Federelement 36 am einen Ende an die Gehäuserippe 42 angelegt. Anschliessend wird die Schraube 44 in die Schraubenaufnahme 40 eingedreht. Auf diese Weise wird das betreffende Ende des Federelementes 36 zwischen Gehäuse 4, Gehäuserippe 42 sowie einem Kopf 48 und einem Schaft 50 der Schraube 44 festgeklemmt. Das Federelement 36 nimmt dabei eine Position parallel zur Längserstreckung des Gerätehalses 8 ein, wie es insbesondere aus den Fig. 2 und 3 zu entnehmen ist.

Alternativ zu der Schraube 44, die in die Schraubenaufnahme 40 eingedreht wird, ist es auch möglich eine selbstschneidende Schraube 44 direkt in das Gehäuse 4 einzudrehen.

An dem von der Klemmeinrichtung 46 abgewandten Ende liegt das Federelement 36 in der an einer Oberseite 52 des Verriegelungselementes 34 ausgeformten Eingriffmulde 54 an. An einer der Eingriffmulde 54 gegenüberliegenden Anlagefläche 56 liegt ein Stellteil 58 eines Wippelementes 60 an. Der Stellteil 58 ist dabei an einem vom Werkzeug abgewandten zweiten Ende des Wippelementes 60 ausgeformt, während an dem dem Werkzeug zugewandten ersten Ende ein Betätigungsteil 62 in Form eines Knopfes ausgebildet ist. Ferner weist das Wippelement 60 zwischen dem Stellteil 58 und dem Betätigungsteil 62 ein in etwa hülsenförmiges Schwenkelement 64 auf.

Bei der Montage der Justiervorrichtung 30 wird zunächst das Wippelement 60 mit seinem Schwenkelement 64 in entsprechend ausgeformte Lagerausnehmungen 66 an der unteren Gehäuseseite 28 eingesetzt. Anschliessend wird das Verriegelungselement 34 zwischen den beiden Führungsrippen 35 eingesetzt. Dabei kommt das Verriegelungselement 34 mit seiner Anlagefläche 56 in Anlage mit dem Stellteil 58 des Wippelementes 60. Als nächstes wird das Federelement 36 mit dem einen Ende in die Eingriffmulde 54 des Verriegelungselementes eingesetzt und mit dem anderen Ende an die Gehäuserippe 42 der Klemmeinrichtung 46 angelegt. Anschliessend erfolgt das Festklemmen des Federelementes 36 durch die Schraube 44 wie bereits oben beschrieben. Sobald das Federelement 36 durch die Klemmeinrichtung 46 gehalten ist, ist die gesamte Justiervorrichtung 30 am Gehäuse 4 gehalten und somit vormontiert. Die Schraube 44 stellt auf diese Weise das einzige Befestigungsmittel dar, das notwendig ist, um die Justiervorrichtung 30 am Gehäuse 4 festzulegen.

Die Lagerung der Justiervorrichtung 30 am Gehäuse 4 ist derart ausgeformt, dass die Schraubenaufnahme 40, die Führungsrippen 35 wie auch die Lagerausnehmungen 66 und damit alle Lagerbereiche der Justiervorrichtung 30 in eine Richtung ausgeführt sind, die einer Hauptentformungsrichtung E des Gehäuses 4 entspricht.

Nach der Vormontage der Justiervorrichtung 30 wird der Handschutz 10 über den Gerätehals 8 und die Justiervorrichtung 36 geschoben. Hierbei wird der flexible Bereich 14 des Handschutzes 10 direkt auf dem Betätigungsteil 62 platziert. Zudem bildet der Handschutz 10 zusammen mit den Lagerausnehmungen 66 eine Lageraufnahme, die das Schwenkelement 64 des Wippelementes 60 drehbar am Gehäuse 4 festlegt.

Zur Befestigung der Führungsvorrichtung 22 an der Säbelsäge 2 drückt die bedienende Person mit dem Zeigefinger gegen den flexiblen Bereich 14 des Handschutzes 10. Hierdurch wird der Betätigungsteil 62 des Wippelementes 60 gegen die untere Gehäuseseite 28 gedrückt und gleichzeitig der Stellteil 58 von der Gehäuseseite 28 weg bewegt. Dabei drückt der Stellteil 58 gegen die Anlagefläche 56 des Verriegelungselementes 34 und bewegt dieses entgegen der Federkraft des Federelementes 36 von den Verbindungsausnehmungen 18 weg. Hierbei werden die Verriegelungsabschnitte 38 aus den Verbindungsausnehmungen 18 herausbewegt. Die Justiervorrichtung 30 nimmt somit eine Freigabestellung ein. In dieser können die Verbindungsteile 20 in die freien Querschnitte der Verbindungsaufnahmeeinrichtung 16 eingeführt werden.

Sobald dabei der gewünschte Abstand des Führungsschuhes 26 gegenüber dem Gehäuse 4 erreicht ist, beendet die bedienende Person den Druck auf den flexiblen Bereich 14 des Handschutzes 10 beziehungsweise gegen den Betätigungsteil 62 des Wippelementes 60. Hierdurch werden die Verriegelungsabschnitte 38 des Verriegelungselementes 34 infolge der Federkraft des Federelementes 36 wieder durch die Gehäuseöffnungen 32 hindurch in die Verbindungsausnehmungen 18 hinein verlegt. Dabei kommen die Verriegelungsabschnitte 38 jeweils in Eingriff mit einer der Verriegelungseinschnürungen 27, wodurch die Verbindungseinrichtung 21 und damit die gesamte Führungsvorrichtung gegenüber dem Gehäuse 4 in der gewünschten Position festgelegt ist.

## Patentansprüche

1. Motorisch angetriebene Säbelsäge (2) mit einem im Druckgussverfahren hergestellten Gehäuse (4), an dem im Bereich eines Gerätehalses (8), der als Haltegriff dient und der eine Werkzeugöffnung (6) aufweist, eine Führungsvorrichtung (22) zur Führung der Säbelsäge (2) an einem Werkstück lösbar befestigt ist, wobei die Führungsvorrichtung (22) eine Verbindungseinrichtung (21) aufweist und am Gehäuse (4) eine Verbindungsaufnahmeeinrichtung (16) vorgesehen ist, die eine Führung für die Verbindungseinrichtung (21) bildet und an der eine Justiervorrichtung (30) angeordnet ist, mit der die Verbindungseinrichtung (21) gegenüber dem Gehäuse (4) festlegbar ist und die durch eine Federkraft in eine Verriegelungsstellung vorgespannt ist, die durch ein gerades Federelement (36) erzeugt ist, das im Wesentlichen in Längsrichtung des Gerätehalses (8) ausgerichtet ist, **dadurch gekennzeichnet, dass** alle Lagerbereiche der Justiereinrichtung (30) am Gehäuse (4) zusammen mit diesem in einer Richtung ausgeführt sind, die einer gemeinsamen Entformungsrichtung (E) entspricht

2. Motorisch angetriebene Säbelsäge nach Anspruch 1, **dadurch gekennzeichnet, dass** das gerade Federelement (36) durch einen federnden Stab gebildet ist.

3. Motorisch angetriebene Säbelsäge nach Anspruch 1 oder 2 **dadurch gekennzeichnet, dass** die Justiereinrichtung (30) durch ein einziges Befestigungsmittel am Gehäuse (4) festgelegt ist.

4. Motorisch angetriebene Säbelsäge nach Anspruch 3, **dadurch gekennzeichnet, dass** das Befestigungsmittel durch eine am Gehäuse (4) einschraubbare Schraube (44) gebildet ist und die Schraube (44) zusammen mit einer Gehäuserippe (42) eine Klemmeinrichtung (46) bildet, in der das Federelement (36) festgelegt ist.

5. Motorisch angetriebene Säbelsäge nach einem der Ansprüche 1 bis 4, **dadurch gekennzeichnet, dass** die Justiervorrichtung (30) an einer Gehäuseseite (28) ein Verriegelungselement (34), das in der Verriegelungsstellung durch eine Gehäuseöffnung (32) hindurch mit der Verbindungseinrichtung (21) in Eingriff steht, sowie ein Wippelement (60) aufweist, das an einem ersten Ende einen Betätigungsteil (62) und an einem zweiten Ende einen Stellteil (58) aufweist, der bei Drücken des Betätigungsteiles (62) in Richtung der Gehäuseseite (28) das Verriegelungselement (34) in Richtung von der Gehäuseseite (28) weg bewegt.

6. Motorisch angetriebene Säbelsäge nach Anspruch 5, **dadurch gekennzeichnet, dass** das Wippelement (60) in einer Lageraufnahme schwenkbar gehalten ist, die durch das Gehäuse (4) und einen an ihm befestigten Handschutz (10) begrenzt ist.

7. Motorisch angetriebene Säbelsäge nach Anspruch 6, **dadurch gekennzeichnet, dass** der Handschutz (10) einen flexiblen Bereich (14) ausbildet, der im montierten Zustand an dem Betätigungsteil (62) anliegt.

8. Motorisch angetriebene Säbelsäge nach Anspruch 7, **dadurch gekennzeichnet, dass** der flexible Bereich (14) eine geriffelte Oberfläche aufweist.

## Claims

1. Reciprocating power saw (2), having a housing (4) produced by the diecasting method to which a guide device (22) for guiding the reciprocating power saw (2) against a workpiece is fixed detachably in the region of a neck (8) of the reciprocating power saw (2) which serves as a holding grip and includes a tool aperture (6), the guide device (22) including a connection device (21) and a connection receptacle arrangement (16) being provided in the housing (4), which connection receptacle arrangement (16) forms a guide for the connection device (21) and has arranged thereon an adjustment device (30) by means of which the connection device (21) is fixable with respect to the housing (4) and which adjustment device (30) is preloaded to a locking position by a spring force generated by a rectilinear spring element (36) which is aligned substantially in the longitudinal direction of the neck (8) of the reciprocating power saw (2), **characterised in that** all of the bearing zones of the adjustment device (30) are formed on the housing (4) together therewith in a direction which corresponds to a common direction (E) of removal from the mould.

2. Reciprocating power saw according to claim 1, **characterised in that** the rectilinear spring element (36) is formed by a resilient rod.

3. Reciprocating power saw according to claim 1 or 2, **characterised in that** the adjustment device (30) is fixed to the housing (4) by a single fixing means.

4. Reciprocating power saw according to claim 3, **characterised in that** the fixing means is formed by a screw (44) which is insertable into the housing (4) and the screw (44) forms together with a rib (42) of the housing a clamping device (46) in which the spring element (36) is fixed.

5. Reciprocating power saw according to any one of claims 1 to 4, **characterised in that** the adjustment device (30) includes on one side (28) of the housing a locking element (34) which in the locking position is in engagement with the connection device (21) through an opening (32) in the housing, and a rocker element (60) which has at a first end an actuation part (62) and at a second end a positioning part (58) which upon depression of the actuation part (62) in the direction towards the side (28) of the housing moves the locking element (34) in the direction away from the side (28) of the housing.

6. Reciprocating power saw according to claim 5, **characterised in that** the rocker element (60) is pivoted in a bearing receptacle which is delimited by the housing (4) and a hand guard (10) fixed thereto.

7. Reciprocating power saw according to claim 6, **characterised in that** the hand guard (10) includes a flexible zone (14) which rests against the actuation part (62) in the assembled state.

8. Reciprocating power saw according to claim 7, **characterised in that** the flexible zone (14) has a corrugated surface.

## Revendications

1. Scie sabre à entraînement motorisé (2), avec un carter (4) qui est réalisé par procédé de coulée sous pression et sur lequel un dispositif de guidage (22) destiné à guider la scie sabre (2) est fixé de manière détachable à une pièce dans la zone d'un col d'appareil (8) servant de poignée et comportant une ouverture d'outil (6), le dispositif de guidage (22) comportant un dispositif de liaison (21), et sur le carter (4) étant prévu un dispositif récepteur de liaison (16) qui forme un guide pour le dispositif de liaison (21) et sur lequel est disposé un dispositif d'ajustement (30) qui permet de bloquer le dispositif de liaison (21) par rapport au carter (4) et qui est précontraint dans une position de verrouillage par une force élastique produite par un élément de ressort droit (36) orienté sensiblement dans la direction longitudinale du col d'appareil (8), **caractérisée en ce que** toutes les zones de montage du dispositif d'ajustement (30) sur le carter (4) sont conçues, conjointement avec ce dernier, dans une direction qui correspond à une direction de démoulage commune (E).

2. Scie sabre à entraînement motorisé selon la revendication 1, **caractérisée en ce que** l'élément de ressort droit (36) est formé par une barre élastique.

3. Scie sabre à entraînement motorisé selon la revendication 1 ou 2, **caractérisée en ce que** le dispositif d'ajustement (30) est bloqué contre le carter (4) par un moyen de fixation unique.

4. Scie sabre à entraînement motorisé selon la revendication 3, **caractérisée en ce que** le moyen de fixation est formé par une vis (44) vissable dans le carter (4), et la vis (44) forme, conjointement avec une nervure de carter (42), un dispositif de serrage (46) dans lequel l'élément de ressort (36) est bloqué.

5. Scie sabre à entraînement motorisé selon une des revendications 1 à 4, **caractérisée en ce que** le dispositif d'ajustement (30) comporte, sur un côté de carter (28), un élément de verrouillage (34), qui en position de verrouillage est en prise avec le dispositif de liaison (21) à travers une ouverture de carter (32), et un élément basculant (60) qui comporte, à une première extrémité, une partie d'actionnement (62) et, à une seconde extrémité, une partie de commande (58), laquelle éloigne l'élément de verrouillage (34) du côté de carter (28) en cas de poussée sur la partie d'actionnement (62) en direction du côté de carter (28).

6. Scie sabre à entraînement motorisé selon la revendication 5, **caractérisée en ce que** l'élément basculant (60) est maintenu à pivotement dans un logement qui est limité par le carter (4) et par un protège-mains (10) fixé à celui-ci.

7. Scie sabre à entraînement motorisé selon la revendication 6, **caractérisée en ce que** le protège-mains (10) comporte une zone souple (14) qui, en position montée, est appliquée sur la partie d'actionnement (62).

8. Scie sabre à entraînement motorisé selon la revendication 7, **caractérisée en ce que** la zone souple (14) comporte une surface striée.
